# EUROPEAN PATENT APPLICATION

(11) **EP 4 775 508 A1**
(43) Date of publication of application: **15.07.2026**
(21) Application number: 26151099.4
(22) Date of filing: 09.01.2026
(51) Int. Cl.: B65D 65/06, B65D 65/24, B65D 81/26

(54) **WRAPPING FOR FOOD**

(30) Priority: 14.01.2025 ES 202530040 U
(71) Applicant: Marcadiferencia, S.L., 08013 Barcelona (ES)
(72) Inventor: Hernández Cugat, Meritxell, Barcelona (ES)
(74) Representative: Pons IP

(57) **Abstract**

The present invention relates to a laminate wrapping for food comprising a base (1) having a laminate configuration with opposing first lateral sides and second lateral sides opposite and perpendicular to the first lateral sides, inner ribs (3) extending from the base (1) to support the food (6) and separate it from the liquid that may be released by the food (6) placed on the base (1) and a perimeter ridge (2) on the contour of the base (1) to contain the liquids. Additionally, the wrapper has inner closing flaps (5) on the first lateral sides of the wrapper and longitudinal and parallel slots (4) on the second lateral sides. Elastic bands (8) are formed between the slots (4) and the perimeter of the wrapper.

## Description

### OBJECT OF THE INVENTION

The object of the invention is a wrapping for food or food wrapper having a configuration that allows food, especially sliced, fresh or moist food, to be transported, stored or refrigerated/frozen under optimal conditions. In this way, liquids from the food are contained in a clean way during use by means of a laminate wrapper with ridges.

### BACKGROUND OF THE INVENTION

Wrappings for food or food wrappers, in laminate form, which allow food to be stored in a closed manner by folding are known. Most commonly used wrappings for food are made of paper or plastic, which allows for great flexibility and adaptability to different food shapes.

When the items are moist, or have liquids that may be released, the wrappings may be made of materials that do not absorb liquids. Moist foods include meat, sausages, cheese, fish, fruit and certain processed products such as sweets.

As regards wrappings, alternatively, there are semi-rigid plastic wrappers in the form of a bag, tray or box which allow products to be stored or frozen with a certain amount of liquid and which have a closure at the mouth. In this case, the wrappers have certain seams that prevent the wrapper from completely opening, so that the food must be inserted and removed through a mouth in the wrapper.

In the case of laminate paper wrappers, a coating, such as waxing or plastic film, is applied to reinforce the paper and prevent the absorption of liquid by the paper. However, the biggest problem with these wrappers is that liquids from moist food spill out when the food is placed on the wrapper or when it is unwrapped, thus meaning more mess during handling.

In the case of dry food, similar problems may arise as the food can be placed on the laminate wrapper and spill out of the wrapper.

### DESCRIPTION OF THE INVENTION

The object of the invention is a reusable laminate wrapping for food or food wrapper intended for wrapping bulk foods, such as sausages, cheese, sliced meats, meat, fish, etc. Therefore, the properties of said wrapping are compatible with food contact. Food is preferably understood to be fresh food with a certain moisture content and that is able to release liquid during transport and storage.

The wrapper is flexible, allowing the food to be placed therein and by folding different sides to enclose the food for transport, storage and/or freezing/refrigeration. Therefore, the wrapper has a base with an inner face intended to receive the food and an opposite outer face intended to be the outer surface of the wrapper. The base has a laminate configuration with opposing first lateral sides and second lateral sides that are opposite and perpendicular to the first lateral sides. The outer surface can be smooth or embossed and can be decorated or personalised in a variety of ways for advertising purposes.

Preferably, the wrapper comprises inner embossments or grooves in the base to drain liquids from the food. Said inner embossments or grooves are arranged in a pattern in the central area of the base, on the inner face intended to receive the food, so that the food is raised above the base on the inner ribs. The configuration of said inner ribs can be varied, such as protrusions, always establishing an elevation above the base on which the food rests and a space between ribs in which the liquid can flow.

In addition, the base of the wrapping has a perimeter ridge around its contour. This perimeter ridge prevents liquids from the food from spilling out of the wrapper when it is in an extended position, for example, when unwrapping the food. This allows for greater cleanliness when handling food in the wrapper by preventing liquids from spilling out of the packaging onto the table from its lateral sides.

Preferably, the wrapper is reusable by washing or cleaning, allowing for multiple uses and extending the life of the wrapper. This saves material by avoiding the continued use of disposable wrappers, single-use wrappers or wrappers that degrade easily in contact with food or in storage.

The wrapper can be made of flexible materials such as silicone, TPU (Thermoplastic Polyurethane) silicones, translucent, transparent or opaque plastics or derivatives. On the one hand, translucent or transparent materials allow the stored material to be seen, making it easy to identify without having to open the wrapper. On the other hand, opaque materials protect the stored food from exposure to light, being more suitable for wrappers that can be exposed or placed in visible locations.

Optionally, the base of the wrapper has flaps on the opposing first lateral sides to adhere to the outer surface of the base or the food. Said flaps are arranged on the very base of the wrapper and have a surface finish that favours adhesion on contact. The surface finish can be a very smooth surface on both flaps so that the friction produced is over the entire contact surface, thus increasing adhesion. Once the first lateral side is folded, the other opposing first lateral side is folded and overlapped on the outer surface of the wrapper.

In addition, the wrapper may have two longitudinal locking slots close to the second lateral sides. The base may comprise a perimeter edge around the slots to prevent liquids from spilling out of the wrapper through the slots, equivalent to the perimeter ridge.

Once the two opposing first lateral sides of the wrapper are folded over the food, the second lateral sides, which have the slots on the outside of the first lateral sides already folded, are folded. In this way, the second lateral sides with the slots overlap externally, allowing the slot in the last folded second lateral side to be stretched so that it surrounds the base, the food and the rest of the folded lateral sides externally.

The width of the slot can be larger than at least the thickness of the perimeter ridge and have high elasticity, so that once the first lateral sides of the wrapper are folded, the second lateral side with the slot can be easily stretched so that the rest of the wrapper is inserted through the slot. In this way, with the packaging in the closed position, the slot surrounds the base, the food, the first lateral sides folded over the food and the second lateral side opposite and folded over the first lateral sides externally. Therefore, a closure of the wrapper is established by folding the first and second lateral sides to ensure its closed position and an elastic closure with the slot surrounding the rest of the wrapper to prevent the food from spilling out.

Optionally, the slot can be longer longitudinally than the central area that receives the food, so that, when the first lateral sides are folded, the slot is larger than the width of the wrapper, allowing greater flexibility to adapt to the insertion of the base, the food and the rest of the lateral sides.

Alternatively, other closing elements than the flaps and slots are possible, for example, adhesive bands or buttons and straps with eyelets. In any case, the closing elements allow a position to be maintained that prevents the lateral sides from unfolding and the food from being exposed.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a view of the base of the wrapping for food intended to receive the food in an extended position.
Figure 2 shows a partial section of half of the wrapping.
Figure 3 shows a detailed perspective view of a corner of the wrapping in an extended position.
Figure 4 shows a top view of an intermediate step of closing the wrapping with the first two lateral sides folded.
Figure 5 shows a perspective view of the closed wrapping for food.

### PREFERRED EMBODIMENT OF THE INVENTION

A preferred embodiment of a wrapping for food or food wrapper, which is the object of this invention, is described below.

The laminate wrapping for food of the preferred embodiment comprises a base (1) having a laminate configuration with opposing first lateral sides and second lateral sides opposite and perpendicular to the first lateral sides, inner ribs (3) extending from the base (1) to support the food (6) and separate it from the liquid that may be released by the food (6) placed on the base (1) and a perimeter ridge (2) on the contour of the base (1) to contain the liquids.

Additionally, the wrapper has inner closing flaps (5) on the first lateral sides of the wrapper and longitudinal and parallel slots (4) on the second lateral sides. Elastic bands (8) are formed between the slots (4) and the perimeter of the wrapper.

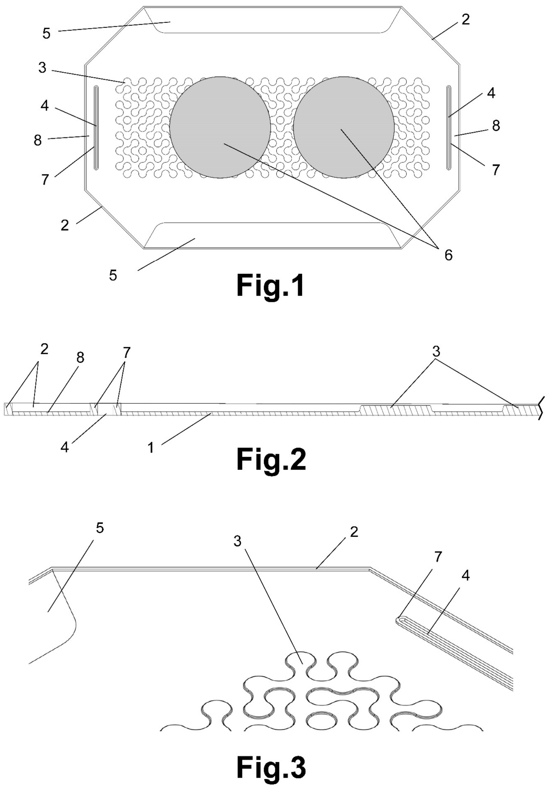

Fig.1 shows the wrapper or wrapping in an extended position from a top view of the base (1) on which the food (6), for example, two pieces of fruit, hamburgers or the like, is placed. The food (6) is placed on the inner ribs (3), which establish a series of elevations intended to separate the food (6) from the base (1) and allow a small amount of liquid released from the food (6) to be contained between the inner ribs (3).

The inner ribs (3) shown are lobe-shaped and arranged in a pattern, establishing outlet channels between inner ribs (3) in the base (1) to prevent liquid from accumulating in the central part of the base (1). Likewise, in the embodiment shown, the inner ribs (3) are located in the central area of the base (1) where the food (6) is placed.

Furthermore, the wrapper comprises the perimeter ridge (2) on the contour of the base (1) to prevent liquids or food from spilling out of the wrapper. The thickness of said perimeter ridge (2) is greater than the thickness of the base (1) of the wrapper, so that the liquid from the food is contained in the base (1). The amount of liquid contained by the perimeter ridges (2) is proportional to the difference in thickness between the base (1) and the perimeter ridge (2).

Fig.1 also shows the flaps (5) along the first lateral sides of the wrapper and two slots (4) in the second lateral sides opposite and perpendicular to the first lateral sides. The base (1) also has a perimeter edge (7) around the slots (4) to prevent liquids from spilling out of the base (1) through the slots (4).

The surface of the base (1) is larger than the surface of the food (6) to be wrapped, since it has to cover it completely and also establish the closures of the wrapper. Furthermore, the wrapper is made of a flexible material, for example, silicone, which can be easily folded and cleaned with water to remove previous food residue and allow for further use. **In** this way, the wrapper is reusable with different foods (6) over time.

On the other hand, Fig.2 shows a partial section of half of the wrapping or wrapper, starting from the middle of the second lateral side up to the central area of the wrapper, where the thickness of the base (1), the perimeter ridge (2) and the inner ribs (3) can be seen. The food (6), not shown, is arranged on the inner ribs (3), which have a separation between inner ribs (3) that channel the liquid released by the food (6) while the perimeter ridge (2) establishes a limit to the liquid intended to prevent the liquid from spilling out of the wrapper in an extended position.

Furthermore, the wrapper has the perimeter edge (7) around the slots (4) which prevents the liquid from the food (6) from spilling out of the base (1) through the slots (4) in the extended position of the base (1). When closing the wrapper, the rest of the wrapper is inserted through said stretched slot (4), so that the band (8) partially surrounds the outside of the base (1).

**In** the preferred embodiment shown, the thicknesses of the ridges, ribs and edges (2,3,7) are equal. Furthermore, the thicknesses of the ridges, ribs and edges (2,3,7) are greater than, for example, twice the thickness of the base (1). All the ridges, ribs and edges (2,3,7) are in the form of perpendicular projections from the base (1) although other shapes are possible.

Fig.3 shows a detailed perspective view of the wrapper. The inner ribs (3) are raised above the base (1) to receive the food (6) on same (3) and form channels or closed spaces between the inner ribs (3). The perimeter edge (2) is raised above the base (1) on its perimeter, and the perimeter edge (7) is raised above the base (1) around the slot (4).

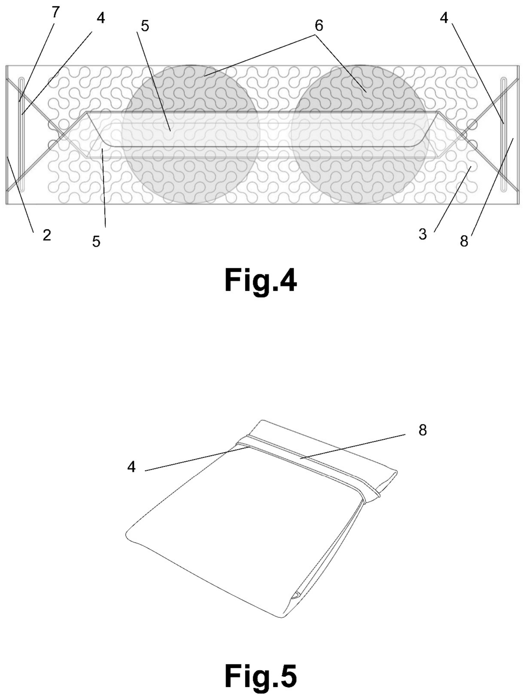

Fig.4 shows an intermediate step of folding the wrapper. In this case, the first lateral sides with the flaps (5) are folded, covering the food (6) laterally. The flaps (5) have a smooth surface finish that facilitates adhesion, so that the flaps (5) establish an adhesion with the food (6) or the outer surface of the base (1) that increases friction to prevent the first lateral sides from slipping.

The first folded first lateral side contacts the flap (5) with the food (6) and the second folded first lateral side contacts the flap (5) with the outside of the previously folded first lateral side. Thus, in this intermediate step, the wrapper is arranged in the form of a tube, and, in this step, the liquids are concentrated on the base (1) of the wrapper where the inner ribs (3) are located.

Lastly, the opposing second lateral sides with the slots (4) are folded over the previously folded first lateral sides. **In** this embodiment, the second lateral side with a slot (4), folded last, is folded over the rest of the lateral sides and the slot (4) is stretched to insert the rest of the folded lateral sides through said slot (4), so that the band (8) is surrounding the outer face of the base (1). By means of the elasticity of the slot (4) and the band (8), the wrapper is closed by the compression of the slot (4), as shown in Fig.5 in a perspective view.

Fig.5 shows the outer surface of the base (1), on which the band (8) crosses from side to side. This figure shows the base (1), the first two lateral sides folded over the base (1) and the second lateral side through the slot (4) of the second lateral side folded last. **In** this way, the lateral sides maintain the closed position to prevent the food (6) from spilling out.

To open the wrapper, the slot (4) is stretched and the folded lateral sides and the base (1) are pulled out of the slot (4), so that it no longer surrounds the outside of the base (1), allowing each lateral side to be unfolded back to the original position in Fig.1 with the food (6) in the centre.

**In** the preferred embodiment, the wrapper with the food (6) therein would be stored with the first and second lateral sides folded upwards, so that the wrapper sits on the outer face to the base (1) which has the inner ribs (3) on the inner face. Therefore, during storage, the food (6) reduces contact with the released liquid that is contained between the inner ribs (3). Furthermore, spilling of the liquid is prevented, as the folded first and second lateral sides move the liquids to the central area where the inner ribs (3) are located.

The wrapper material shown is translucent in Fig.4, allowing the inside of the wrapper to be seen once the first and second lateral sides have been folded. In contrast, in the embodiment shown in Fig.5, the wrapper is made of an opaque material that prevents the food inside from being seen.

In the preferred embodiment, the wrapper consists of a single piece of silicone, TPU (Thermoplastic Polyurethane) silicones or their derivatives, which is flexible and to which the optical properties are determined depending on its use.

## Claims

1. A reusable wrapping for food comprising a base (1) having a laminate configuration with opposing first lateral sides and second lateral sides opposite and perpendicular to the first lateral sides, intended for wrapping food (6), **characterised in that** it further comprises;
inner ribs (3) extending from the base (1) to support the food (6) and separate it from the liquid that may be released by the food (6) placed on the base and
a perimeter ridge (2) on the contour of the base (1) to contain the liquids.

2. The wrapping of claim 1, wherein the perimeter ridge (2) and the inner ribs (3) are thicker than the base (1).

3. The wrapping of claim 1, wherein the inner ribs (3) are located in the centre of the base (1).

4. The wrapping of claim 1, wherein the inner ribs (3) are lobe-shaped and arranged in a pattern.

5. The wrapping of claim 1, further comprising closing flaps (5) on the base (1) on the first lateral sides intended to contact and adhere to each other when folding the base (1) to wrap the food (6).

6. The wrapping of claim 5, wherein the flaps (5) have a smooth surface finish that facilitates adhesion to other surfaces.

7. The wrapping of claim 1, further comprising longitudinal and parallel slots (4) arranged close to the second lateral sides of the base (1) wherein at least one of the slots (4) is intended to receive and facilitate the insertion of the base (1), the food (6) and the rest of the previously folded lateral sides into said slot (4) and to maintain its closed position.

8. The wrapping of claim 7, further comprising perimeter edges (7) located around the slots (4) to prevent liquid from spilling through the slots (4).

9. The wrapping of claim 7, further comprising elastic bands (8) between the slots (4) and the perimeter of the base (1) to stretch to facilitate the insertion of the base (1), the food (6) and the rest of the previously folded lateral sides into said slot (4).

10. The wrapping of claim 1, consisting of a single piece and made of a material selected from silicone, TPU silicone and their derivatives.
